Europäisches Patentamt

(19) European Patent Office

Office européen des brevets

(11) Veröffentlichungsnummer: **0 028 768**
B1

(12) **EUROPÄISCHE PATENTSCHRIFT**

(45) Veröffentlichungstag der Patentschrift:
29.05.85

(51) Int. Cl.⁴: **C 12 G  3/08**, B 01 D  13/00,
C 12 H  1/16

(21) Anmeldenummer: 80106644.0

(22) Anmeldetag: 29.10.80

(54) Verfahren zur (nachträglichen) Einstellung eines gewünschten Extraktgehaltes im Bier mittels Dialyse.

(30) Priorität: 03.11.79  DE 2944499

(43) Veröffentlichungstag der Anmeldung:
20.05.81 Patentblatt 81/20

(45) Bekanntmachung des Hinweises auf die Patenterteilung:
29.05.85 Patentblatt 85/22

(84) Benannte Vertragsstaaten:
AT BE CH DE FR GB IT LI LU NL SE

(56) Entgegenhaltungen:
BE - A - 883 829
DE - B - 2 243 800
FR - A - 1 585 376
FR - A - 2 333 546
GB - A - 1 079 517
GB - A - 1 177 126
US - A - 2 122 761

(73) Patentinhaber: Wicküler-Küpper-Brauerei KG,
Bendahler Strasse 31, D-5600 Wuppertal (DE)

(72) Erfinder: Werhahn, Hermann Josef, Grimlinghauser
Brücke 52, D-4040 Neuss (DE)
Erfinder: Jirmann, Friedrich, Winchenbachstrasse 55,
D-5600 Wuppertal (DE)
Erfinder: Niefind, Hans-Jürgen, Dr., Oberer
Grifflenberg 226, D-5600 Wuppertal (DE)

(74) Vertreter: von Kreisler, Alek, Dipl.-Chem. et al,
Deichmannhaus am Hauptbahnhof, D-5000 Köln 1 (DE)

## Beschreibung

Das Bedürfnis nach alkoholvermindertem bis hin zu alkoholfreiem Bier steigt in zunehmendem Maße. Hierfür spielen hauptsächlich diätetische Gründe wie auch die Verkehrsgesetzgebung die Hauptrolle. In anderen Ländern können auch religiöse Gründe das Interesse an der Herstellung von Bieren mit wenig oder keinem Alkohol begründen.

Neben einer Alkoholverminderung ist häufig auch eine Kohlenhydratverminderung notwendig, damit ein solches Bier in den Diätplan eines bestimmten Personenkreises paßt.

Es sind bereits eine Reihe von Verfahren bekannt, nach denen Biere mit vermindertem Alkoholgehalt hergestellt werden können:

1. Verfahren mit kontrollierter Gärung, bei denen beim Erreichen eines bestimmten Alkoholgehaltes die Gärung unterbrochen wird;
2. Verfahren, die darauf hinzielen, daß nur geringe Mengen an vergärbaren Zuckern gebildet werden;
3. Verfahren, bei denen anstelle normaler Bierhefe andere Organismen eingesetzt werden;
4. Verfahren mit nachträglicher Alkoholreduzierung
    a) Verfahren, bei denen ein normal vergorenes Bier mit teilweise vergorenem Bier, unvergorener Würze, Zuckerlösung oder Wasser verdünnt wird;
    b) Alkoholreduzierung durch Auskochen des Alkohols unter atmosphärischem Druck als auch unter reduziertem Druck (Vacuum);
    c) Adsorption des Alkohols an Kieselgel oder andere poröse Adsorberharze;
    d) Anwendung der Umkehrosmose zur Alkoholreduzierung.

Alle nach dem Verfahren 1 bis 3 sowie 4a bis b hergestellten Biere waren jedoch aus der Sicht der Verbrauchererwartung nicht befriedigend. Das Aroma dieser Biere zeichnete sich entweder durch einen starken Würzegeschmack oder durch die bei der thermischen Behandlung gebildeten Maillardprodukte mit einem typischen Brotgeschmack aus. Außerdem besitzen die meisten der nach den vorgenannten Verfahren hergestellten Biere aufgrund des hohen Zuckeranteils einen großen Kaloriengehalt und sind insbesondere für Diabetiker ungeeignet. Das Verfahren 4c ist technisch, soweit bekannt, nicht durchgeführt worden.

Auch die Anwendung 4d, daß heißt die umgekehrte Osmose, konnte sich großtechnisch nicht zur Alkoholreduzierung im Bier durchsetzen, da die Anlage einen großen Pflegeaufwand aufgrund der Membranen bedarf, die leicht verstopfen und auch leicht durch Mikroorganismen abgebaut werden können. Außerdem sind die Energiekosten durch die Anwendung hoher Drücke extrem hoch und die dafür einzusetzenden Membranen sehr kostspielig.

Die Erfindung stellt sich die Aufgabe, die vorgenannten Nachteile der bisher bekannten Verfahren zu beseitigen und ein Bier von reinem Geruch und Geschmack sowie von einem entsprechend geringen Kaloriengehalt herzustellen. Dabei soll der Energiebedarf sehr gering sein und die Anlage sollte ununterbrochen über Monate hinaus gefahren werden können, ohne daß es zu Störungen durch Verstopfung oder mikrobiellen Abbau kommt.

Ferner kann, wenn gewünscht, auch der Restextrakt des Bieres derart reduziert werden, so daß ein solches Bier als alkoholvermindert und kohlenhydratarm zu bezeichnen ist. Ein derartiges Bier mit wenig Kalorien und wenig Alkohol ist besonders für diätetische Lebensweise geeignet.

Diese Aufgabe wird durch die vorliegende Erfindung gelöst. Die Erfindung betrifft Anspruch 1. Die erfindungsgemäße Kapillardialyse kann mit auf dem Markt vorhandenen Dialysatoren, wie sie zum Beispiel zur Blutwäsche (Haemodialyse) eingesetzt werden, durchgeführt werden.

Das Prinzip des Verfahrens beruht darauf, daß der Alkohol durch eine semipermeable Membran in eine Spüllösung, genannt Dialysat (zumeist Wasser oder Bier mit geringerem Alkoholgehalt), diffundiert. Die Diffusion erfolgt solange, bis ein Konzentrationsgleichgewicht auf beiden Seiten erreicht ist. Der Grad der Alkoholreduzierung ist somit abhängig von der Alkoholkonzentration im Dialysat, diese läßt sich durch die Veränderung der Fließgeschwindigkeit sowohl auf der Dialysat- als auch auf der Bierseite genau einstellen.

Wichtige Voraussetzung für die Funktion der Dialyse ist, daß der Druck auf beiden Seiten gleich ist. Ein Transmembrandruck von Null (oder nahezu Null) ist notwendig, um zu verhindern, daß Wasser (oder ein anderes Spülmittel), welches die Membran immer passieren kann, sich auf einer von beiden Seiten anreichert.

Neben dem Alkohol können auch andere Bierinhaltstoffe diffundieren, insbesondere niedermolekulare Zucker und in geringem Maße auch Bitterstoffe.

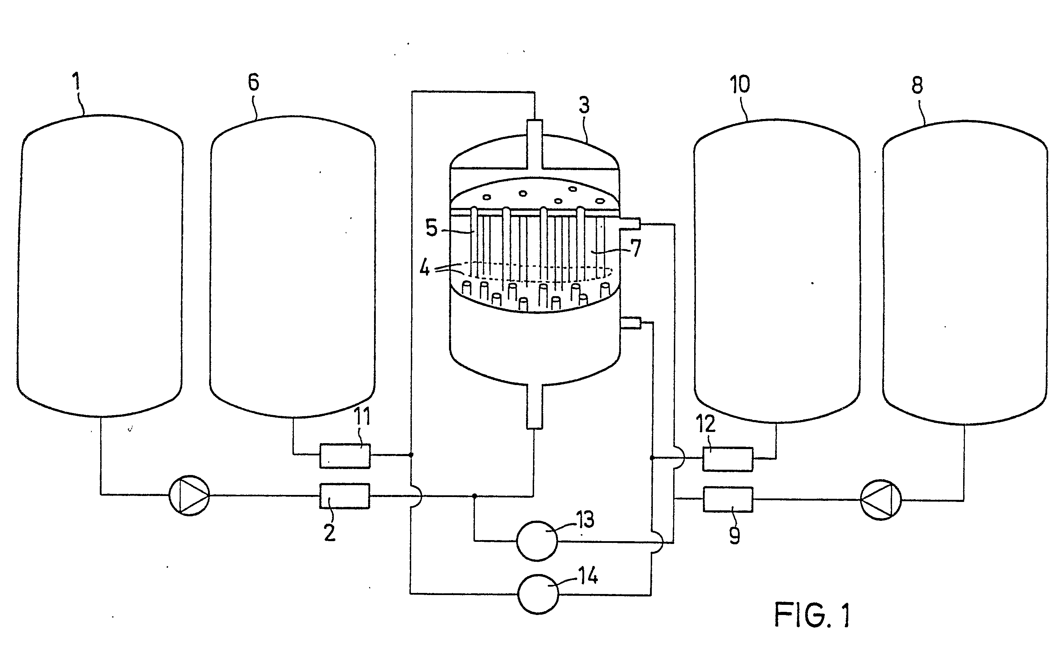

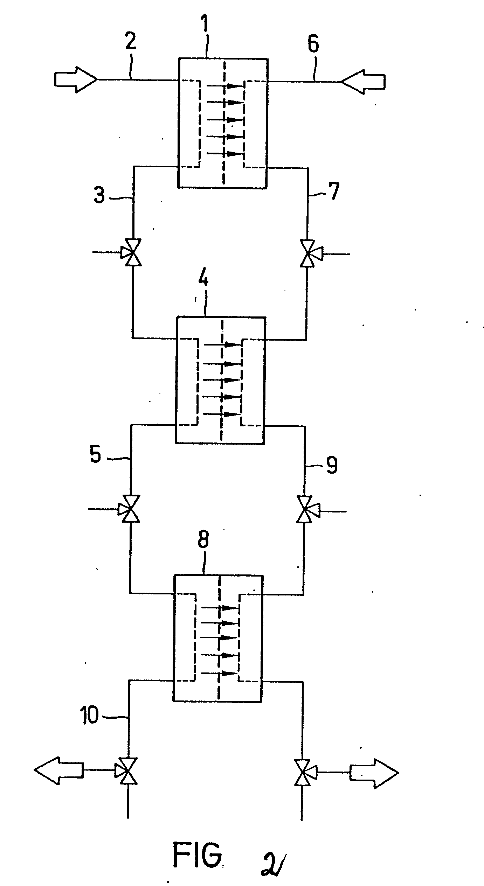

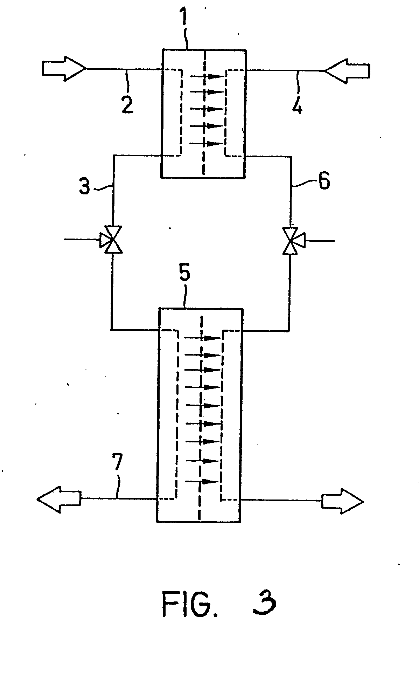

Das Prinzip der Dialyse ist in Abbildung 1 dargestellt.

Bier wird aus dem Vorratsbehälter (1) über einen Strömungsregler (2) durch eine Dialysevorrichtung (3), die auch als Modul bezeichnet wird, bestehend aus Bündeln (4) semipermeabler Hohlfäden (5), gedrückt. Die Poren der Hohlfasern haben einen inneren Durchmesser von 0,001 bis 0,1 µ. Die Gesamtoberfläche eines Moduls (Diffusionsfläche) beträgt 0,8 bis 10 m², vorzugsweise zwischen 1,4 und 5 m². Durch die bündelförmige Anordnung läßt sich in einem kleineren Volumen eine große Diffusionsfläche

2

unterbringen. Das Bier strömt durch die Hohlfasern (5) direkt in ein Auffanggefäß (6). Durch die Hohlfädenzwischenräume (7) fließt entweder im Gleich-, Quer- oder vorzugsweise im Gegenstrom das Spülmittel, das aus dem Behälter 8 kommt. Im Modul (3) kommt es nun zur Diffusion des Alkohols vom Bier in das Spülmittel. Die Fließgeschwindigkeit des Spülmittels wird über einen Strömungsregler (9) eingestellt. Die Fließgeschwindigkeiten sind entscheidend für das Konzentrationsgefälle Bier — Alkohol zu Spülmittel — Alkohol und damit ein wichtiger Parameter für den Grad der gewünschten Alkoholverminderung. Das Spülmittel — Alkoholgemisch (Dialysat) wird in einem Auffangbehälter (10) aufgefangen.

Die Drücke im Modul (3) werden sowohl auf der Spülmittel — wie Bierseite durch geeignete Druckregler (11 und 12) eingestellt. Der Druck im gesamten System muß über dem Kohlensäuresättigungsdruck liegen, damit es im System nicht zu einer Entbindung des im Bier gelösten $CO_2$ kommt, da die dabei entstehenden $CO_2$-Bläschen sich an der Membran anlagern und dadurch die Dialyse stören. In Tabelle 1 sind die Kohlensäuresättigungsdrücke in Abhängigkeit von der Temperatur für Bier mit einem Stammwürzegehalt von 11—18% zusammengestellt. Als Betriebsdruck sind geeignet Drücke zwischen 2 und 6 bar, vorzugsweise 2,5 bis 4 bar, im Speziellen 2,7 bar.

Um im Modul (3) einen Transmembrandruck von nahezu Null zu erreichen, befinden sich sowohl auf der Einström- wie auch auf der Austrittseite Differenzdruck-Manometer (13 und 14). Das alkoholreduzierte Bier als auch das Dialysat können sowohl unter Druck als auch drucklos in Vorratsbehältern (6 und 10) gesammelt werden.

Da der Druckabfall im Modul (3) auf der Bierseite, verursacht durch die dünnen Hohlfäden, größer ist als auf der Dialysatseite, läßt sich ein mittlerer Transmembrandruck gleich Null über die gesamte Diffusionsfläche dadurch erreichen, daß zunächst auf der Biereintrittseite ein höherer Druck, 0,05 bis 1,0 bar, vorzugsweise 0,5 bar, eingestellt wird als auf der Wasserseite. Um diesen Betrag muß dann am Ende des Systems der Wasserdruck gegenüber Bieraustrittdruck erhöht werden.

Der Grad der Alkoholreduzierung ist abhängig von:

a) dem Verhältnis Bierfluß zu Wasserfluß.
   Aus Tabelle 2 geht deutlich hervor, daß umso mehr Alkohol aus dem Ausgangsbier diffundiert, je größer das Verhältnis vom Wasser zum Bier ist. Gleiches gilt auch für die Extraktabnahme im Ausgangsbier.
b) der Verweilzeit im Dialysator.
   Aus Tabelle 3 ist ersichtlich, daß die Alkoholreduzierung des Ausgangsbieres mit der Verweilzeit = geringere Bierdurchflußgeschwindigkeit zunimmt. Mit der Extraktabnahme verhält es sich ähnlich.
c) der Biertemperatur.
   Aus Tabelle 4 ist zu entnehmen, daß mit steigender Temperatur die Alkoholreduzierung zunimmt. Ebenfalls werden mit höherer Temperatur mehr Restextrakt sowie geringfügig Bitterstoffe aus dem Ausgangsbier herausgenommen.
d) dem Konzentrationsgefälle: Bier zu Spülmittel.
   Bei der Alkoholverminderung wird zunächst Wasser als Spülmittel eingesetzt. Es ist aber auch möglich, wie noch ausgeführt wird, z. B. ein alkoholschwaches bzw. -freies Bier als Spülmittel auf der Diaysatseite zu fahren (s. Beispiel).

Je nach Anlage und Betriebsvoraussetzungen kann der Fachmann leicht die Bedingungen a bis d so abändern, daß es zu optimalen Ergebnissen kommt. Beispielsweise könnten die nach a an sich günstigeren höheren Spülmittelmengen durch eine entsprechende Erhöhung der Verweilzeit (b) und/ oder der Temperatur (c) verringert werden.

Mit dem erfindungsgemäß beschriebenen Verfahren läßt sich eine Alkoholreduzierung im Bier genau steuern. Im Extremfall kann der Restalkoholgehalt des Ausgangsbieres auf Null abgesenkt werden. Es kann aber auch, wenn gewünscht (wie später noch ausgeführt wird), zu einer Alkoholanreicherung kommen. Neben dem Alkoholgehalt wird auch die Diffusion der Restextraktstoffe wie auch der Bitterstoffgehalt und anderer Bierinhaltstoffe gezielt gesteuert.

Die Leistung der Anlage ist abhängig von der Oberfläche des Dialysators. Die Oberfläche pro Modul liegt zwischen 0,8 und 10 m². Es hat sich als günstig erwiesen, einen Modul mit einer Diffusionsfläche von ca. 5 m² zu wählen.

Die Anlage kann wartungfrei im 24-Stunden-Betrieb gefahren werden. Mit einer Diffusionsfläche von 5 m² können pro Stunde ca. 1,5 hl entsprechend 36 hl pro Tag alkoholvermindertes Bier erzeugt werden. Es lassen sich beliebig viele Module nebeneinander anordnen, so daß jede gewünschte Leistung erreicht werden kann.

Mit dem erfindungsgemäß beschriebenen Verfahren ist es möglich:

a) alkoholreduzierte Biere herzustellen
   Dabei läßt sich die Alkoholverminderung durch die Wahl folgender Einflußgrößen steuern:

3

0 028 768

Ausgangsbier
Dialysemittel
Temperatur
Fließgeschwindigkeit von Ausgangsbier und Dialysemittel
Dialysierstrecke = Diffusionsfläche
Transmembrandruck

Dadurch ist es möglich:

alkoholfreie Biere (Alkoholgehalt <0,5%)
alkoholarme Biere (Alkoholgehalt 0,5—1,5%)
als auch jeden gewünschten Alkoholgehalt einzustellen.

b) Ferner bewirken die oben genannten Einflußgrößen die Einstellung des Restextraktes, dadurch werden auch die den Diabetiker belastenden Kohlenhydrate dem Bier entzogen.

Anstelle von frischem Wasser als Spülmittel kann aber auch entsprechend behandeltes Wasser-Dialysat im Recycling-Verfahren eingesetzt werden. Dabei wird zunächst der im Wasser angereicherte Alkohol durch entsprechende Verfahren (Auskochen des Alkohols, Adsorption an Kieselgele oder Kunstharze, insbesondere aber Adsorption an Zellulose und Maisstärke) entfernt.

Dieses nahezu alkoholfreie Dialysat läßt sich nun beliebig oft, nach jeweiligem Alkoholentzug, erneut als Spülmittel einsetzen.

Man kann aber auch hier das Recycling-Verfahren anwenden, indem dem Dialysat-Bier, bevor es erneut eingesetzt wird, der Alkoholgehalt nach einem der oben erwähnten Verfahren entzogen wird.

Nach einer anderen Ausführungsform der Erfindung können die Dialysatoren oder Module statt parallel auch hintereinander geschaltet werden. Daraus ergeben sich die Kombinationen, die schematisch in den Abbildungen zusammengestellt sind.

Beispiel 1

Alkohol- und Extraktreduzierung eines untergärigen Vollbieres Typ Pilsener

Dialysebedingungen:

| | |
|---|---|
| Spülmittel | Wasser |
| Fließgeschwindigkeit Bierseite | 500 ml/min pro Modul |
| Fließgeschwindigkeit Dialysatseite | 250 ml/min pro Modul |
| Bierdruck vor dem Modul | 4,10 bar |
| Bierdruck hinter dem Modul | 4,05 bar |
| Dialysatdruck vor dem Modul | 4,05 bar |
| Dialysatdruck hinter dem Modul | 4,05 bar |
| Transmembrandruck | 0,025 bar |
| Membranoberfläche | $1,3 \text{ m}^2$ pro Modul |

Analysenwerte

| | Ausgangsbier | dial. Bier | Dialysat + Alk. |
|---|---|---|---|
| Stammwürze, % | 11,7 | **) | — |
| wirklicher Extrakt, % | 3,91 | 2,60 | 1,84 |
| Alkohol, % | 3,91 | 3,40 | 0,44 |
| Bitterstoffe, EBC-Einh. | 37,0 | 34,1 | 4,4 |
| Geruch und Geschmack | einwandfrei | einwandfrei | — |

**) Eine Berechnung des Stammwürzegehaltes im dialysierten Bier nach der Ballingschen Formel ist aufgrund der Alkoholverminderung nicht möglich.

4

**0 028 768**

Beispiel 2

Alkohol- und Extraktreduzierung eines untergärigen Vollbieres Typ Pilsener

Dialysebedingungen:

| Spülmittel | Wasser |
|---|---|
| Fließgeschwindigkeit Bierseite | 150 ml/min pro Modul |
| Fließgeschwindigkeit Dialysatseite | 150 ml/min pro Modul |
| Bierdruck vor dem Modul | 4,10 bar |
| Bierdruck hinter dem Modul | 4,05 bar |
| Dialysatdruck vor dem Modul | 4,05 bar |
| Dialysatdruck hinter dem Modul | 4,05 bar |
| Transmembrandruck | 0,025 bar |
| Membranoberfläche | 1,3 $m^2$ pro Modul |

Analysenwerte

| | Ausgangsbier | dial. Bier | Dialysat + Alk. |
|---|---|---|---|
| Stammwürze, % | 11,8 | **) | — |
| wirklicher Extrakt, % | 3,88 | 2,61 | 0,70 |
| Alkohol, % | 3,87 | 1,22 | 2,24 |
| Bitterstoffe, EBC-Einh. | 36,4 | 19,7 | 9,9 |
| Geruch und Geschmack | einwandfrei | einwandfrei | — |

**) Eine Berechnung des Stammwürzegehaltes im dialysierten Bier nach der Ballingschen Formel ist aufgrund der Alkoholverminderung nicht möglich.

Beispiel 3

Alkohol- und Extraktreduzierung eines untergärigen Vollbieres Typ Pilsener

Dialysebedingungen:

| Spülmittel | Wasser |
|---|---|
| Fließgeschwindigkeit Bierseite | 100 ml/min pro Modul |
| Fließgeschwindigkeit Dialysatseite | 100 ml/min pro Modul |
| Bierdruck vor dem Modul | 4,10 bar |
| Bierdruck hinter dem Modul | 4,05 bar |
| Dialysatdruck vor dem Modul | 4,05 bar |
| Dialysatdruck hinter dem Modul | 4,05 bar |
| Transmembrandruck | 0,025 bar |
| Membranoberfläche | 1,3 $m^2$ pro Modul |

Analysenwerte

| | Ausgangsbier | dial. Bier | Dialysat + Alk. |
|---|---|---|---|
| Stammwürze, % | 11,8 | **) | — |
| wirklicher Extrakt, % | 3,88 | 2,29 | 1,00 |

5

Tabelle (Fortsetzung)

|  | Ausgangsbier | dial. Bier | Dialysat + Alk. |
|---|---|---|---|
| Alkohol, % | 3,87 | 0,47 | 2,62 |
| Bitterstoffe, EBC-Einh. | 36,4 | 16,9 | 12,8 |
| Geruch und Geschmack | einwandfrei | einwandfrei | — |

**) Eine Berechnung des Stammwürzegehaltes im dialysierten Bier nach der Ballingschen Formel ist aufgrund der Alkoholverminderung nicht möglich.

### Beispiel 4

Alkohol- und Extraktreduzierung eines obergärigen Vollbieres Typ Kölsch

Dialysebedingungen:

Spülmittel                        Wasser
Fließgeschwindigkeit Bierseite          500 ml/min pro Modul
Fließgeschwindigkeit Dialysatseite      250 ml/min pro Modul
Bierdruck vor dem Modul                 4,10 bar
Bierdruck hinter dem Modul               4,05 bar
Dialysatdruck vor dem Modul             4,05 bar
Dialysatdruck hinter dem Modul          4,05 bar
Transmembrandruck                      0,025 bar
Membranoberfläche                     1,3 m$^2$ pro Modul

Analysenwerte

|  | Ausgangsbier | dial. Bier | Dialysat + Alk. |
|---|---|---|---|
| Stammwürze, % | 11,4 | **) | — |
| wirklicher Extrakt, % | 3,92 | 2,68 | 1,90 |
| Alkohol, % | 3,94 | 3,45 | 0,48 |
| Bitterstoffe, EBC-Einh. | 28,0 | 25,4 | 4,0 |
| Geruch und Geschmack | einwandfrei | einwandfrei | — |

**) Eine Berechnung des Stammwürzegehaltes im dialysierten Bier nach der Ballingschen Formel ist aufgrund der Alkoholverminderung nicht möglich.

### Beispiel 5

Alkohol- und Extraktreduzierung eines alkoholreichen Diätbieres

Dialysebedingungen:

Spülmittel                        Wasser
Fließgeschwindigkeit Bierseite          750 ml/min pro Modul
Fließgeschwindigkeit Dialysatseite      250 ml/min pro Modul
Bierdruck vor dem Modul                 4,10 bar
Bierdruck hinter dem Modul                4,05 bar
Dialysatdruck vor dem Modul             4,05 bar
Dialysatdruck hinter dem Modul          4,05 bar
Transmembrandruck                      0,025 bar
Membranoberfläche                     1,3 m$^2$ pro Modul

Analysenwerte

|  | Ausgangsbier | dial. Bier | Dialysat + Alk. |
|---|---|---|---|
| Stammwürze, % | 11,3*) | **) | — |
| wirklicher Extrakt, % | 2,16 | 1,92 | 0,42 |
| Alkohol, % | 4,47 | 3,49 | 1,99 |
| Bitterstoffe, EBC-Einh. | 31,0 | 28,9 | 4,4 |
| Geruch und Geschmack | einwandfrei | einwandfrei | — |

**) Eine Berechnung des Stammwürzegehaltes im dialysierten Bier nach der Ballingschen Formel ist aufgrund der Alkoholverminderung nicht möglich.

*) Der ursprüngliche Stammwürzegehalt betrug 11,3%. In einem übervergorenem Bier läßt sich der Stammwürzegehalt nach der Ballingschen Formel nicht mehr rückrechnen.

## Beispiel 6

### Alkohol- und Extraktreduzierung eines alkoholreichen Diätbieres

Dialysebedingungen:

| | |
|---|---|
| Spülmittel | Wasser |
| Fließgeschwindigkeit Bierseite | 160 l/Stunde pro Modul |
| Fließgeschwindigkeit Dialysatseite | 80 l/Stunde pro Modul |
| Bierdruck vor dem Modul | 3,0 bar |
| Bierdruck hinter dem Modul | 2,5 bar |
| Dialysatdruck vor dem Modul | 2,75 bar |
| Dialysatdruck hinter dem Modul | 2,75 bar |
| Transmembrandruck | 0,0 bar |
| Membranoberfläche | 5 m² pro Modul |

Analysenwerte

|  | Ausgangsbier | dial. Bier | Dialysat + Alk. |
|---|---|---|---|
| Stammwürze, % | 11,2*) | **) | — |
| wirklicher Extrakt, % | 2,16 | 1,92 | 0,42 |
| Alkohol, % | 4,74 | 3,49 | 1,70 |
| Bitterstoffe, EBC-Einh. | 31,0 | 28,8 | 3,5 |
| Geruch und Geschmack | einwandfrei | einwandfrei | — |

**) Eine Berechnung des Stammwürzegehaltes im dialysierten Bier nach der Ballingschen Formel ist aufgrund der Alkoholverminderung nicht möglich.

*) Der ursprüngliche Stammwürzegehalt betrug 11,2. In einem übervergorenem Bier läßt sich der Stammwürzegehalt nach der Ballingschen Formel nicht rückrechnen.

# 0 028 768

## Beispiel 7

### Alkohol- und Extraktreduzierung eines obergärigen Vollbieres Typ Alt

Dialysebedingungen:

| | |
|---|---|
| Spülmittel | Wasser |
| Fließgeschwindigkeit Bierseite | 500 ml/min pro Modul |
| Fließgeschwindigkeit Dialysatseite | 250 ml/min pro Modul |
| Bierdruck vor dem Modul | 4,10 bar |
| Bierdruck hinter dem Modul | 4,05 bar |
| Dialysatdruck vor dem Modul | 4,05 bar |
| Dialysatdruck hinter dem Modul | 4,05 bar |
| Transmembrandruck | 0,025 bar |
| Membranoberfläche | 1,3 m² pro Modul |

Analysenwerte

| | Ausgangsbier | dial. Bier | Dialysat + Alk. |
|---|---|---|---|
| Stammwürze, % | 11,74 | **) | — |
| wirklicher Extrakt, % | 4,05 | 3,48 | 0,62 |
| Alkohol, % | 3,96 | 2,74 | 2,25 |
| Bitterstoffe, EBC-Einh. | — | — | — |
| Geruch und Geschmack | einwandfrei | einwandfrei | — |

**) Eine Berechnung des Stammwürzegehaltes im dialysierten Bier nach der Ballingschen Formel ist aufgrund der Alkoholverminderung nicht möglich.

## Beispiel 8

### Alkohol- und Extraktreduzierung eines untergärigen Vollbieres Typ Export

Dialysebedingungen:

| | |
|---|---|
| Spülmittel | Wasser |
| Fließgeschwindigkeit Bierseite | 500 ml/min pro Modul |
| Fließgeschwindigkeit Dialysatseite | 250 ml/min pro Modul |
| Bierdruck vor dem Modul | 4,10 bar |
| Bierdruck hinter dem Modul | 4,05 bar |
| Dialysatdruck vor dem Modul | 4,05 bar |
| Dialysatdruck hinter dem Modul | 4,05 bar |
| Transmembrandruck | 0,025 bar |
| Membranoberfläche | 1,3 m² pro Modul |

8

Analysenwerte

|  | Ausgangsbier | dial. Bier | Dialysat + Alk. |
|---|---|---|---|
| Stammwürze, % | 12,63 | **) | — |
| wirklicher Extrakt, % | 4,41 | 3,92 | 0,74 |
| Alkohol, % | 4,29 | 2,97 | 2,34 |
| Bitterstoffe, EBC-Einh. | — | — | — |
| Geruch und Geschmack | einwandfrei | einwandfrei | — |

**) Eine Berechnung des Stammwürzegehaltes im dialysierten Bier nach der Ballingschen Formel ist aufgrund der Alkoholverminderung nicht möglich.

## Beispiel 9

### Alkohol- und Extraktreduzierung eines obergärigen Vollbieres Typ Doppelbock

Dialysebedingungen:

| | |
|---|---|
| Spülmittel | Wasser |
| Fließgeschwindigkeit Bierseite | 500 ml/min pro Modul |
| Fließgeschwindigkeit Dialysatseite | 500 ml/min pro Modul |
| Bierdruck vor dem Modul | 4,10 bar |
| Bierdruck hinter dem Modul | 4,05 bar |
| Dialysatdruck vor dem Modul | 4,05 bar |
| Dialysatdruck hinter dem Modul | 4,05 bar |
| Transmembrandruck | 0,025 bar |
| Membranoberfläche | 1,3 m² pro Modul |

Analysenwerte

|  | Ausgangsbier | dial. Bier | Dialysat + Alk. |
|---|---|---|---|
| Stammwürze, % | 18,63 | **) | — |
| wirklicher Extrakt, % | 7,33 | 6,46 | 0,56 |
| Alkohol, % | 6,29 | 3,96 | 1,76 |
| Bitterstoffe, EBC-Einh. | — | — | — |
| Geruch und Geschmack | einwandfrei | einwandfrei | — |

**) Eine Berechnung des Stammwürzegehaltes im dialysierten Bier nach der Ballingschen Formel ist aufgrund der Alkoholverminderung nicht möglich.

9

**0 028 768**

Beispiel 10

Alkohol- und Extraktreduzierung eines untergärigen Schankbieres

Dialysebedingungen:

| | |
|---|---|
| Spülmittel | Wasser |
| Fließgeschwindigkeit Bierseite | 600 ml/min pro Modul |
| Fließgeschwindigkeit Dialysatseite | 300 ml/min pro Modul |
| Bierdruck vor dem Modul | 4,10 bar |
| Bierdruck hinter dem Modul | 4,05 bar |
| Dialysatdruck vor dem Modul | 4,05 bar |
| Dialysatdruck hinter dem Modul | 4,05 bar |
| Transmembrandruck | 0,025 bar |
| Membranoberfläche | 1,3 m² pro Modul |

Analysenwerte

| | Ausgangsbier | dial. Bier | Dialysat + Alk. |
|---|---|---|---|
| Stammwürze, % | 7,61 | **) | — |
| wirklicher Extrakt, % | 3,60 | 3,24 | 0,40 |
| Alkohol, % | 2,02 | 1,48 | 0,82 |
| Bitterstoffe, EBC-Einh. | — | — | — |
| Geruch und Geschmack | einwandfrei | einwandfrei | — |

**)  Eine Berechnung des Stammwürzegehaltes im dialysierten Bier nach der Ballingschen Formel ist aufgrund der Alkoholverminderung nicht möglich.

Beispiel 11
(Abbildung 2)

Stufenweise Alkoholreduzierung mit gesteuerter Extraktverminderung

In einer ersten Dialysierstufe (1) wird ein Vollbier (2) mit einem Alkoholgehalt von 4,1% und einem Restextraktgehalt von 3,9% zunächst auf einen Alkoholgehalt von 3,1% (3) und in einer zweiten Dialysierstufe (4) auf einen Alkoholgehalt von 2,0% (5) gebracht. Der Extraktgehalt hat sich hierbei nicht wesentlich verändert. Als Spülmittel wurde in der ersten Stufe (1) zunächst frisches Wasser (6) eingesetzt. Bei einem Verhältnis Bier zu Wasser von 1 : 1 reichert sich das Wasser mit Alkohol um den Betrag an, der aus dem Bier herausgenommen wurde; im Beispiel enthält das Wasserdialysat nach der ersten Stufe eine Alkoholkonzentration von 1% (7). Dieses Alkohol-Wasserdialysat wird nun als Spülmittel in der zweiten Dialysierstufe (4) eingesetzt, wobei sich die Alkoholkonzentration beim Austritt (7) aus dem Dialysator auf ca. 2% erhöht.

In einer dritten Dialysierstufe (8) wird nun das Bier (5) aus der zweiten Dialysierstufe (4) gegen das Alkohol-Wasserdialysat (9) gefahren. Der Alkoholgehalt der beiden Medien ist nahezu gleich, so daß es nun nur noch zu einer Diffusion der Extraktstoffe von der Bierseite zur Alkohol-Wasserdialysat-Seite kommt. Der Extraktgehalt erniedrigt sich in der dritten Stufe (8) von 3,9% auf 1,9% (10).

Dieses Bier mit einem Alkoholgehalt von 2% und einem Extraktgehalt von 1,9% ist ein Diätbier, welches sich dadurch auszeichnet, daß es sowohl kohlenhydratarm als auch alkoholreduziert ist. Aus diesen beiden Eigenschaften resultiert ein äußerst geringer Kaloriengehalt.

Beispiel 12

Stufenweise Extraktverminderung mit gesteuerter Alkoholreduzierung

Die Verfahrensweise nach Beispiel 11 zur Herstellung eines alkoholreduzierten Bieres mit gesteuerter Extraktverminderung läßt sich auch umkehren, indem zunächst in einer oder mehreren Stufen eine Extraktverminderung angestrebt wird, indem gegen ein Spülmittel mit gleichem Alkoholgehalt dialysiert wird.

10

**0 028 768**

Nachdem der gewünschte Extraktgehalt erreicht ist, wird in einer oder mehreren weiteren Dialysierstufen der Alkoholgehalt reduziert, dabei wird nun auf der Dialysatseite jeweils reines, frisches Wasser eingesetzt.

Beispiel 13
(Abbildung 3)

Stufenweise Alkohol- und Extraktverminderung durch Einsatz unterschiedlicher Module

Man kann eine gesteuerte Alkohol- und Extraktverminderung auch dadurch erreichen, indem man zwei oder mehrere Dialysatoren einsetzt, die sich in der Durchlässigkeit der Hohlfasermembranen gegenüber Alkohol und Restextrakt voneinander unterscheiden.

Es wird zunächst durch die Wahl eines Moduls (1) mit Membranen geringer Durchlässigkeit gezielt der Alkoholgehalt von 4,1% eines Vollbiers (2) auf 2% (3) reduziert. Als Spülmittel (4) wird dabei in der ersten Stufe (1) reines, frisches Wasser eingesetzt. In einer zweiten Stufe wird nun ein Modul (5) eingesetzt, der sich gegenüber dem Modul (1) durch eine größere Porengröße der Membranen unterscheidet. Als Dialysemedien werden sowohl bier- als auch dialysatseitig die jeweiligen Produkte aus der ersten Dialysestufe eingesetzt. Da der Alkoholgehalt auf beiden Seiten gleich ist, kommt es nur noch zu einer Diffusion der Bierextraktstoffe. Die größeren Poren der Membranen des Moduls (5) erhöhen die Diffusionsgeschwindigkeit der Extraktstoffe um ein Wesentliches. Der Extraktgehalt wird dabei von eingangs 3,8% auf 2% vermindert. Dieses Bier (7) hat die in Beispiel 14 genannten Eigenschaften eines Diätbieres.

11

Tabelle 1

Kohlensäuresättigungsdruck in Bieren mit einem Stammwürzegehalt von 11—18% in Abhängigkeit von der Temperatur

Tabelle 2

Abhängigkeit der Alkohol- und Extraktverminderung durch Veränderung der Fließgeschwindigkeiten

Variabel ist die Bierfließgeschwindigkeit

Ausgangsbier:   Alkohol    3,91%
                Extrakt    3,91%

| Verhältnis Wasserfluß : Bierfluß | alkoholreduziertes Bier Alkohol (%) | Extrakt (%) | Dialysat Alkohol (%) | Extrakt (%) |
|---|---|---|---|---|
| 5 : 2 | 1,5 | 2,92 | 1,57 | 0,42 |
| 1 : 1 | 1,73 | 3,06 | 1,76 | 0,50 |
| 5 : 7 | 2,28 | 3,30 | 1,89 | 0,46 |
| 5 : 9 | 2,51 | 3,38 | 1,79 | 0,48 |
| 1 : 2 | 2,60 | 3,40 | 1,84 | 0,44 |
| 5 : 11 | 2,79 | 3,48 | 2,0 | 0,48 |
| 5 : 13 | 2,87 | 3,50 | 2,0 | 0,48 |

Tabelle 3

Abhängigkeit der Alkohol- und Extraktreduzierung von der Verweilzeit (Durchflußgeschwindigkeit) im Dialysator

Ausgangsbier:          Alkohol            3,9%
                       wirklicher Extrakt 3,9%
Membranoberfläche:     1,3 m$^2$

| Bierfließ- geschwindigkeit ml/min | Wasserfließ- geschwindigkeit ml/min | alkoholreduziertes Bier Alkohol (%) | Extrakt (%) | Dialysat Alkohol (%) | Extrakt (%) |
|---|---|---|---|---|---|
| 250 | 250 | 1,74 | 3,14 | 1,88 | 0,50 |
| 300 | 300 | 1,86 | 3,20 | 1,64 | 0,42 |
| 400 | 400 | 2,24 | 3,38 | 1,47 | 0,40 |
| 500 | 500 | 2,23 | 3,40 | 1,25 | 0,3 |

Tabelle 4

Einfluß der Temperatur auf die Alkohol- und Extraktverminderung

Ausgangsbier:

| | Alkohol | 3,93% |
|---|---|---|
| | wirklicher Extrakt | 3,91% |
| | Bitterstoffe | 37,4 EBC |

| Bier-/Wasser-temperatur | Verhältnis Wasserfluß zu Bierfluß | alkoholreduziertes Bier | | | Dialysat | | |
|---|---|---|---|---|---|---|---|
| | | Alkohol (%) | Extrakt (%) | Bitter-stoffe (EBC-Einh.) | Alkohol (%) | Extrakt (%) | Bitter-stoffe (EBC-Einh.) |
| 4°C | 1 : 2 | 2,82 | 3,43 | 33,5 | 1,77 | 0,56 | 4,9 |
| 7—10°C | 1 : 2 | 2,67 | 3,42 | 33,7 | 1,93 | 0,54 | 5,5 |
| 10—13°C | 1 : 2 | 2,65 | 3,42 | 32,9 | 2,02 | 0,58 | 6,2 |
| 13—18°C | 1 : 2 | 2,58 | 3,36 | 32,5 | 2,07 | 0,62 | 6,6 |
| 18—20°C | 1 : 2 | 2,48 | 3,30 | 31,2 | 2,30 | 0,62 | 7,2 |

**Patentansprüche**

1. Verfahren zur Einstellung eines gewünschten Extraktgehaltes in teilweise oder vollständig vergorenem Bier, dadurch gekennzeichnet, daß man das Bier gegen ein Spülmittel an Hohlfasermembranen dialysiert, wobei der Transmembrandruck annähernd gleich Null ist.

2. Verfahren nach Anspruch 1, dadurch gekennzeichnet, daß man das Bier im Kreislauf führt.

3. Verfahren nach Anspruch 1, dadurch gekennzeichnet, daß man das Spülmittel bzw. Dialysat im Kreislauf führt.

4. Verfahren nach Anspruch 1—3, dadurch gekennzeichnet, daß man zusätzlich den Alkoholgehalt durch Dialyse verringert.

5. Verfahren nach Anspruch 4, dadurch gekennzeichnet, daß man zwei oder mehrere Dialysatoren einsetzt, die sich in der Durchlässigkeit der Hohlfasermembranen gegenüber Alkohol und Restextrakt voneinander unterscheiden.

6. Verfahren nach Ansprüchen 1—5, dadurch gekennzeichnet, daß man einen Dialysemodul mit einer Diffusionsfläche von ca. 5 m² einsetzt.

**Claims**

1. A method for regulating a desired extract content in partially or completely fermented beer, characterized in that the beer is dialyzed against a washing means at hollow fiber membranes, the transmembrane pressure being approximately zero.

2. The method according to claim 1, characterized in that the beer is circulated.

3. The method according to claims 1, characterized in that the washing means or dialysate, respectively, is circulated.

4. The method according to claims 1—3, characterized in that additionally the alcohol content is reduced by the dialysis.

5. The method according to claim 4, characterized in that two or more dialyzers are used, which are distinguished from each other in the permeabilities of the hollow fiber membranes to alcohol and residual extract.

6. The method according to claims 1—5, characterized in that a dialysis module having a diffusion area of about 5 m² is employed.

**Revendications**

1. Procédé pour l'ajustement d'une teneur désirée en extrait d'une bière partiellement ou totalement fermentée, caractérisé en ce qu'on dialyse la bière contre un agent de rinçage sur des membranes en fibres creuses, la pression à travers la membrane étant voisine d'une valeur nulle.

2. Procédé selon la revendication 1, caractérisé en ce qu'on fait circuler la bière en circuit fermé.

3. Procédé selon la revendication 1, caractérisé en ce qu'on fait circuler en circuit fermé l'agent de rinçage ou dialysat.

4. Procédé selon les revendications 1 à 3, caractérisé en ce qu'on diminue en outre, par dialyse, la teneur en alcool.

5. Procédé selon la revendication 4, caractérisé en ce qu'on utilise deux ou plus de deux dialyseurs qui diffèrent l'un de l'autre par la perméabilité des membranes en fibres creuses à l'égard de l'alcool et à l'égard de l'extrait résiduel.

6. Procédé selon les revendications 1 à 5, caractérisé en ce qu'on utilise un module de dialyse ayant une surface de diffusion d'environ 5 m$^2$.

FIG. 1

0 028 768

FIG 2

FIG. 3